# EUROPÄISCHE PATENTSCHRIFT

(11) **EP 3 289 751 B1**
(45) Veröffentlichungstag und Bekanntmachung des Hinweises auf die Patenterteilung: **30.01.2019**
(21) Anmeldenummer: 16721754.6
(22) Anmeldetag: 28.04.2016
(51) Int. Cl.: H04L 29/06, G06F 21/35, G06F 21/43

(54) **ÜBERTRAGUNG EINES EINMALSCHLÜSSELS VIA INFRAROTSIGNAL**
TRANSMISSION OF A ONE-TIME KEY VIA INFRARED SIGNAL
TRANSMISSION D'UNE CLÉ UNIQUE VIA SIGNAL INFRAROUGE

(30) Priorität: 30.04.2015 DE 102015106735
(43) Veröffentlichungstag der Anmeldung: 07.03.2018
(73) Patentinhaber: Deutsche Telekom AG, 53113 Bonn (DE)
(72) Erfinder: WAGNER, Jens, 04288 Leipzig (DE); LUDWIG, Theresa, 53129 Bonn (DE)
(74) Vertreter: Braun-Dullaeus Pannen Patent- und Rechtsanwälte
(86) Internationale Anmeldenummer: PCT/EP2016/059522
(87) Internationale Veröffentlichungsnummer: WO 2016/174154

(56) Entgegenhaltungen:
- US-A1- 2007 079 135
- US-A1- 2008 098 466

## Beschreibung

Die Erfindung betrifft ein Verfahren und ein System zum Authentifizieren eines Nutzers vermittels eines lediglich temporär genutzten, ihm fremden und quasi öffentlich zugänglichen Endgerätes bei einem über ein Netzwerk, insbesondere über das Internet, erreichbaren Server, der dem Nutzer den Zugang zu einem personalisierten Online-Dienst, beispielsweise den Zugang zu Social Media, möglich macht.

Der Zugang zu Servern im Internet respektive den über die Server angebotenen Diensten über solchermaßen fremde, quasi öffentlich zugängliche Endgeräte, wie Fernsehgeräte in Hotels oder fremden Wohnräumen und über öffentlich zugängliche Computerterminals stellen ein hohes Sicherheitsrisiko dar, wenn die Nutzung des Dienstes die Eingabe private Zugangsdaten ("Login-Daten") erforderlich macht. Auf der anderen Seite ist aber die Benutzung solcher "öffentlicher" Endgeräte attraktiv, da sie im Vergleich zu dem kleinen Bildschirm eines Smartphones oder Tablets große und hochauflösende Bildschirme und damit eine komfortable Nutzung der Dienste erlauben. Als typische Anwendung sei der Zugriff auf Social Media Webseiten genannt. Gerade in diesem Fall wäre es für den Nutzer ein erheblicher Gewinn, die ihm von dem Dienst zugeordneten eigenen Webseiten automatisch und ohne erhöhtes Risiko über solche öffentlichen Endgeräte aufrufen zu können, sobald er eine fremde Umgebung, wie ein Hotelzimmer, betritt. Weitere Anwendungen sind die Abfrage von Emails, Einkäufe auf Portalen von Internethandelsplattformen und die Abfrage von Handelsdaten oder Kontoständen. Die nachfolgende Beschreibung der Kommunikation mit Social Media ist entsprechend repräsentativ auch für die Kommunikation mit anderen Diensten, für die es der Übermittlung privater Zugangsdaten bedarf.

Solche Zugangsdaten - meist in Form geheimer und permanenter Passwörter - müssen bei den meisten serverbasierten Diensten eingegeben werden, was problematisch ist, wenn der Nutzer dem öffentlichen Endgerät nicht vertrauen kann. Schließlich könnten diese Zugangsdaten durch einen Angreifer, etwa durch Schadsoftware, abgegriffen oder unabsichtlich, durch falsche Konfiguration des Endgerätes beispielsweise die Sitzungsdaten oder die Cookies Dritten zugänglich gemacht werden. Auch hat der Nutzer eines solchen öffentlichen Endgerätes keine Information über Stand des jeweiligen Betriebssystems respektive der Applikationen und insbesondere darüber, inwieweit aktuelle Sicherheitsupdates eingepflegt sind. Insofern birgt es immer eine Gefahr, ein solches Endgerät eines Dritten zu benutzen. Auf der anderen Seite wird jedoch mit dem Verzicht des über öffentliche Endgeräte möglichen Zugangs ein erheblicher Komfort aufgegeben, wie ihn beispielsweise ein Smart-TV in einem Hotelzimmer bieten kann.

Zu dem Sicherheitsaspekt kommt noch hinzu, dass die Bedienung und Menüführung von Fernsehgeräten und Terminals vom jeweiligen Hersteller und vom Modell abhängig ist. So enthalten Zugangsdaten oftmals Sonderzeichen, die mit handelsüblichen Fernbedienungen nur schwer einzugeben sind.

Wie dargelegt, ist die Eingabe von Zugangsdaten, wie permanenter Passwörter bei der Benutzung öffentlich zugänglicher Endgeräte riskant. Die Passwörter periodisch zu ändern verringert zwar das Risiko, kann aber die Sicherheitslücke letztendlich nicht schließen. Abhilfe schaffen hingegen Einmal- oder Sitzungs-Passwörter, sogenannte One Time Keys ("OTK"), die nur für die Benutzung in einer einzigen Sitzung geschaffen sind. Bekannte Verfahren nutzen beispielsweise Transaktionsnummern, die vom Nutzer vorgehalten werden müssen und entsprechend anfällig gegenüber Diebstahl sind. Eine andere aus Bezahlverfahren bekannte Variante ist die Generierung eines OTK mittels eines Servers und dessen Übertragung über ein zweites Medium. Als Beispiel ist die mobilTAN oder mTAN zu nennen. Bei diesem Verfahren wird einer Textnachricht mit einer TAN per SMS zugesendet, wobei die TAN dann manuell in das Endgerät eingegeben werden muss.

Diese Verfahren sind abhängig von der Verschlüsselungsqualität der Mobilfunkverbindung und anfällig gegen Man-in-the-Middle Angriffe. Zwar sind Verbesserungen dieser Verfahren bekannt; Diese haben jedoch allesamt den Nachteil, dass sie immer der Nutzerinteraktion, mithin der Eingabe des OTK, bedürfen. Somit sind die Verfahren auf kurze Zeichenketten oder nur auf einzelne Zahlen für OTKs beschränkt.

Generell ist die Verwendung von Einmalpasswörtern bei Online Diensten beispielsweise aus dem EP 1 840 814 B1, der US 2008/0098466A1 und der US 2007/0079135 A1 bekannt. Auch ist ein Login bei mehreren Diensten aus US20070130463 A1 bekannt.

Eine weitere Möglichkeit die Sicherheit zu erhöhen, ist die Erzeugung des OTK in einem zusätzlichen Gerät, das nur unidirektional mit öffentlichen Netzen verbunden ist. Ein gängiges Verfahren ist beispielsweise das Abscannen eines Flickercodes. Eine solche Datenübertragung ist nur schwer abzuhören, da sie lokal begrenzt ist und nicht durch Wände hindurch geschehen kann. Zudem ist die Erzeugung des OTK nicht nur vom Wissen um ein Passwort sondern auch vom Besitz eines Gegenstandes, wie einer Bankkarte, abhängig. Die bekannten Verfahren sind jedoch aufwendig und unkomfortabel, da der Nutzer direkt vor dem Fernsehgerät stehen und einen angezeigten Code abtippen muss. Wenn das mobile Endgerät die Signale direkt vom Bildschirm empfangen kann, muss der Scanner nahe an den Bildschirm herangeführt werden, was zu unbequemen Körperhaltungen führen kann. Alle während der Sitzung getätigten Eingaben erfolgen außerdem am öffentlichen Endgerät, was weitere Möglichkeiten der Manipulation eröffnet.

Aufgabe der Erfindung ist es nunmehr, ein mit einfachen Mitteln umzusetzendes Verfahren und ein System zu schaffen, die dem Nutzer eine komfortable Authentifikation vermittels eines fremden Endgerätes bei einem über das Netz erreichbaren Dienst ermöglichen.

Diese Aufgaben werden durch das Verfahren nach Anspruch 1 und das System nach Anspruch 6 gelöst. Bevorzugte Ausgestaltungen ergeben sich aus den jeweiligen Unteransprüchen.

Demnach liegt die grundlegende Idee der erfindungsgemäßen Vorgehensweise darin, dass der Nutzer sich zunächst mittels seines mobilen Endgerätes, insbesondere seinem Smartphone, bei dem Server für eine Sitzung authentifiziert und dass dieser Authentifizierung ein vorübergehendes und geheimes Sitzungs-Passwort ("One-Time-Key" oder "OTK") zugeordnet wird. Dieses Sitzungs-Passwort wird von dem mobilen Endgerät über eine abhörsichere, weil auf Sichtkontakt angewiesene Infrarotverbindung an das öffentliche Endgerät, insbesondere ein Fernsehgerät, übertragen. Der Vorteil dieser Übertragung via Infrarotverbindung ist die besonders hohe Sicherheit der Datenübertragung, die ausschließlich zwischen den beiden Geräten geschieht, soweit diese Sichtkontakt miteinander haben. Dabei kann das Smartphone, oder jedes andere mobile Endgerät, als Fernbedienung und Tastatur genutzt werden. Verlässt der Benutzer mit dem Smartphone den Raum ist der Kontakt unterbrochen und die persönlichen Daten sind auf dem Fernsehgerät nicht mehr verfügbar.

Kern des erfindungsgemäßen Verfahrens ist somit, dass sich ein Nutzer mittels des One-Time-Key, der via Infrarot gesendet wird, authentifizieren und mit dem OTK Login-Daten beispielsweise auf ein öffentlich zugängliches Fernsehgerät, übertragen kann. Das erfindungsgemäße Verfahren macht die Eingabe persönlicher Zugangsdaten, wie permanenter Passwörter, in öffentliche Endgeräte überflüssig. Zudem arbeitet es insofern automatisch, als eine Nutzerinteraktion nicht mehr nötig ist. Von besonderem Vorteil ist die physikalisch besonders abhörsichere Verbindung via Infrarotlicht.

Die Erfindung macht es sich zum einen zu Nutze, dass moderne Fernsehgeräte die Möglichkeit bieten, über das Internet eine Verbindung auch zu personalisierten Diensten herzustellen. Zum anderen baut die Erfindung darauf auf, dass viele moderne Smartphones und Tablets wie auch nahezu alle Fernsehgeräte über eine Infrarotschnittstelle verfügen.

Erfindungsgemäß authentifiziert sich der Nutzer zunächst mit seinem ihm zugeordneten eigenen mobilen Endgerät, das ihm entsprechende Datensicherheit gewährleistet, durch Übersendung privater Zugangsdaten für den Zugang zu dem gewünschten Online-Dienst an den Server. Mit Beginn einer Online-Sitzung wird das Sitzungs-Passwort generiert und zwischen dem Server und dem mobilen Endgerät ausgetauscht. Das Sitzungs-Passwort (One-Time-Key) kann vom mobilen Endgerät (erste Variante A) oder vom Server (zweite Variante B) generiert werden. Auf jeden Fall steht das Sitzungs-Passwort nach dem genannten Austausch sowohl dem Server als auch dem mobilen Endgerät zur Verfügung. In einem weiteren Schritt wird das Sitzungs-Passwort über eine Infrarotverbindung vom mobilen Endgerät zu dem fremden Endgerät und von dort über eine beliebige Datenleitung zum Server gesendet. Damit wurde dem Server das Sitzungs-Passwort über eine zweite Datenstrecke einschließlich der sicheren Infrarotverbindung zugesendet. Nun hat der Server die Möglichkeit, das von dem fremden öffentlichen Endgerät erhaltene Sitzungs-Passwort mit dem ihm für diese Sitzung schon zur Verfügung stehenden Sitzungs-Passwort abzugleichen. Wenn der Abgleich zeigt, dass die beiden Sitzungs-Passwörter übereinstimmen, kann der Server den Zugriff des fremden Endgerätes auf den Online-Dienst erlauben.

Auf diese Weise löst das erfindungsgemäße Verfahren die Probleme bislang genutzter Verfahren vollumfänglich. Es realisiert die automatische Generierung und Eingabe eines Sitzungs-Passwortes, so dass das öffentlich zugängliche Endgerät keine Kenntnis über die persönlichen Zugangsdaten erlangt. In einer besonderen Ausführungsform des Verfahrens sind noch nicht einmal Änderungen an der Serverstruktur von Social Media Anbietern notwendig, wenn nämlich bei einer vertrauenswürdigen Stelle, etwa dem Internetserviceprovider, eine Plattform zur Virtualisierung errichtet wird. Eine weitere Form des Verfahrens kann verhindern, dass das öffentlich zugängliche Endgerät die persönlichen Daten manipulieren kann. Vorteilhafterweise stellt das öffentlich zugängliche Endgerät dem Nutzer seine gewohnte Eingabeschnittstelle zur Verfügung und sichert die Kommunikation mit dem Server durch ein kryptographisches Verfahren.

Das Verfahren basiert wegen der Benutzung der Infrarotschnittstelle auf einem "Medienbruch", wobei diese Schnittstelle durch ihre hohe physikalische Sicherheit überzeugt. Das Infrarotsignal kann keine Wände durchdringen und ist daher außerhalb eines Raumes nicht abhörbar. Außerdem hat es auch innerhalb eines Raumes eine hohe Richtwirkung. Daher ist das Verfahren wesentlich unempfindlicher gegen Man-in-the-Middle Attacken als gewöhnliche Funksignale. Gleichzeitig ist die Reichweite und damit der Komfort größer als bei Nahbereichsfunk (NFC). Zudem erlaubt es das einfache Pairing von Smartphone und Fernsehgerät, da Geräte außerhalb des Raumes nicht angesprochen werden können und sich in der Regel nur ein Gerät im Raum befindet.

Dabei stellt das Wissen um das geheime Passwort beim benutzten Smartphone keinen Bruch in der Sicherheitsarchitektur dar, da der Nutzer dieses Gerät, mit dem er sonst sämtliche Login-Vorgänge ausführt, selber kontrolliert. Oftmals sind die Passwörter sogar auf dem Smartphone hinterlegt. Die Übertragung zwischen Smartphone und öffentlichen Endgerät kann vollkommen automatisch verlaufen. Im Idealfall wird das temporär benutzte öffentliche Endgerät von allen permanenten Daten ferngehalten. Um die Sicherheit weiter zu erhöhen, ist es vorteilhaft, wenn das Sitzungs-Passwort jeweils nach Ablauf eines definierten Zeitraumes und/oder bei Eintreten eines bestimmten Ereignisses erneuert wird.

Weitere Vorteile liegen in der Personalisierung des Nutzers durch sein Smartphone; Dabei sind relevante Einstellungen, das Aussehen der Startseite, Spracheinstellungen oder einfach nur für den Nutzer interessante Dienste auf dem Smartphone gespeichert. Das Smartphone kann erfindungsgemäß die Anforderung erfüllen, temporäre Logindaten zu erzeugen und zum Fernsehgerät zu übertragen. Auf dem Fernsehgerät können persönliche Daten angezeigt werden, ohne dass ein Sicherheitsrisiko eingegangen wird. Mit dem Smartphone kann die Kommunikation mit dem Server des Dienstanbieters bewerkstelligt werden.

Ein besonderer Vorteil der erfindungsgemäßen Vorgehensweise ist, dass die IP-Adresse, die geographische Position, die Betriebssystemausstattung, die Anwendersoftware und andere computerspezifische Merkmale des Anwenders gegenüber dem Anbieter von Internetdiensten verborgen bleiben. Zudem kann das Verfahren so automatisiert werden, dass die Verbindung zu temporären Geräten automatisch aufgebaut wird, sobald diese in Reichweite einer physikalisch gesicherten Infrarotverbindung sind.

Die Erfindung wird nachfolgend anhand der Figuren 1 bis 5 näher beschrieben. Es zeigen:
- **Figur 1**: den prinzipiellen Aufbau des erfindungsgemäßen Systems,
- **Figur 2**: ein Ablaufdiagramm einer ersten Ausführungsvarianten,
- **Figur 3**: ein Ablaufdiagramm einer zweiten Ausführungsvarianten,
- **Figur 4**: ein System, das ein Clearing ermöglicht, und
- **Figur 5**: ein Ablaufdiagramm mit Clearing.

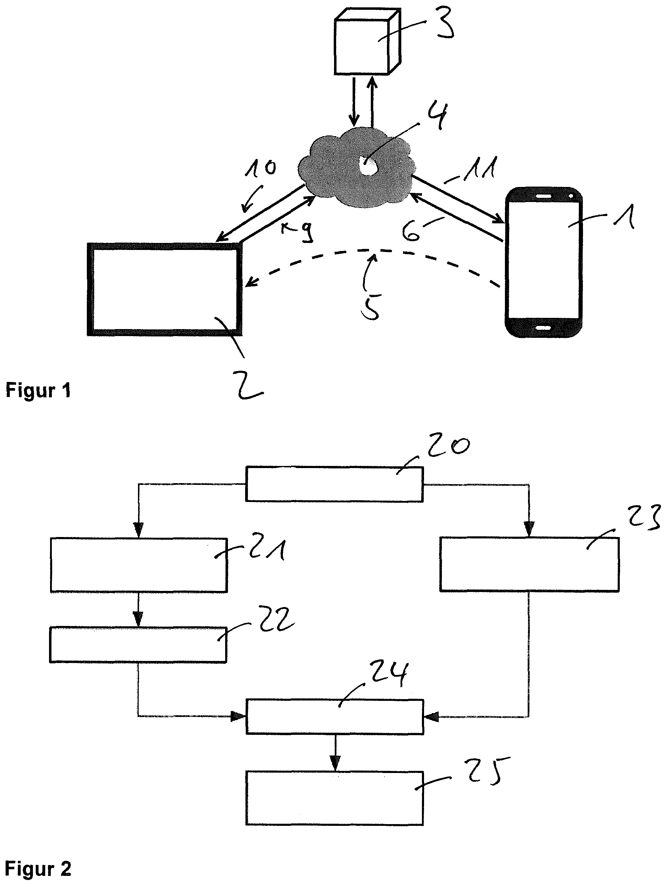

Figur 1 zeigt den generellen Aufbau des Systems zur Umsetzung des erfindungsgemäßen Verfahrens. Dabei verfügt der Nutzer über ein mobiles Endgerät, hier sein Smartphone 1, das mit einer Infrarotschnittstelle ausgestattet ist. In einer abgeschlossenen Räumlichkeit ist zudem ein ebenfalls mit Infrarotschnittstelle ausgestattetes Fernsehgerät 2 vorhanden, das über die Netzwerkverbindung 9, 10 Zugriff auf das Internet 4 hat. Auch das Smartphone 1 hat über die Funkverbindung 6 Zugriff auf das Internet 4. In bestimmten Varianten des Verfahrens wird neben dem Hinkanal auch der Rückkanal 11 der Funkverbindung 6 genutzt. Über das Internet 4 ist ein Server 3 erreichbar, der Daten von Smartphone 1 und vom Fernsehgerät 2 über Internet 4 empfangen (Datenleitung 7) und entsprechend verschicken (Datenleitung 8) kann. Das Smartphone 1 kommuniziert mit dem in Sichtweite befindlichen Fernsehgerät 2 über eine Infrarotverbindung 5, über die der Austausch beliebiger Daten möglich ist.

Figur 2 zeigt den Ablaufplan der ersten Variante des Verfahrens: Dazu generiert eine auf dem Smartphone 1 installierte Applikation ("App") in Schritt 20 einen One-Time-Key ("OTK") und sendet diesen in Schritt 21 zusammen mit der IP-Adresse des Servers respektive der URL über die Infrarotverbindung an das Fernsehgerät. Anstelle des Fernsehgerätes kann auch ein Terminal oder ein entsprechend aufgerüsteter Computer verwendet werden. Statt des Smartphones ist auch die Benutzung eines Tablets oder eines anderen kleinen und personalisierten Gerätes möglich. Das Fernsehgerät empfängt den OTK vom Smartphone und sendet eine Kopie von diesem via Internet (Datenleitung 6, 7) ebenfalls an den Server (Schritt 22). Das Fernsehgerät meldet sich in diesem Schritt 22 am Server an.

Zugleich übermittelt das Smartphone in Schritt 23 dem Server den durch das permanente Passwort autorisierten OTK, wobei es die Funkverbindung 6 nutzt. Der Server erhält die Schlüssel und vergleicht in Schritt 24 beide erhaltene OTKs. Sind die OTKs identisch, sendet er im Rahmen einer Authentifizierung eine Bestätigung an das Fernsehgerät und übermittelt gleichzeitig die auf dem Server gespeicherten Login-Daten des Nutzers (Schritt 25). Da das geheime und permanente Passwort im Protokoll nicht vorkommt, kann es durch das temporär genutzte Fernsehgerät nicht kompromittiert werden. Das temporäre Passwort kann auch nach jeder Sitzung, nach einem bestimmten Ereignis oder nach Zeitablauf verfallen. Solange Sichtkontakt zwischen dem Smartphone und dem Fernsehgerät besteht, ist es jederzeit möglich, automatisch ein neues OTK anzufordern und an das Fernsehgerät zu übertragen. Der Schlüsselaustausch läuft somit ohne Nutzerinteraktion ab und ist ohne Komforteinbußen auch in kurzen Zeitabständen realisierbar. Dabei kann der Schlüssel verhältnismäßig lang und damit sehr sicher sein.

Diese erste Variante ist bei der Erzeugung des OTK auf die Rechenleistung des Smartphones angewiesen. Auch wenn Smartphones heute über erhebliche Rechenleistung verfügen, ist es von Vorteil die empfindliche Schlüsselgenerierung auf den Server zu verlagern.

Eine weitere Schwachstelle liegt in dem temporär genutzten Gerät. Wie dargelegt, hat der Nutzer im Allgemeinen keine Informationen über den Zustand des Gerätes oder darüber, welcher Personenkreis darauf Zugriff hatte. Das Fernsehgerät könnte den OTK an Dritte weitergeben und der Dritte könnte dann die Sitzung übernehmen. Um dies zu verhindern, kann der Server anwiesen werden, den Datenverkehr zu trennen. Alle Ausgaben werden auf dem temporären Gerät durchgeführt, während Eingaben über Tastatur und Maus nur vom Smartphone akzeptiert werden, wo sie mit dem permanenten Passwort authentifiziert sind. Damit sind alle Eingaben wie gewohnt abgesichert. Ein Angreifer müsste somit zeitgleich das Smartphone und das Gerät kompromittieren. Die Trennung der Datenströme hat für den Nutzer einen weiteren Vorteil: Er ist mit der Bedienung seines Smartphones vertraut und kann unmittelbar mit dem System arbeiten. Fernsehgeräte haben dagegen meist herstellerspezifische wenig intuitive Eingabesysteme für Buchstaben und Sonderzeichen.

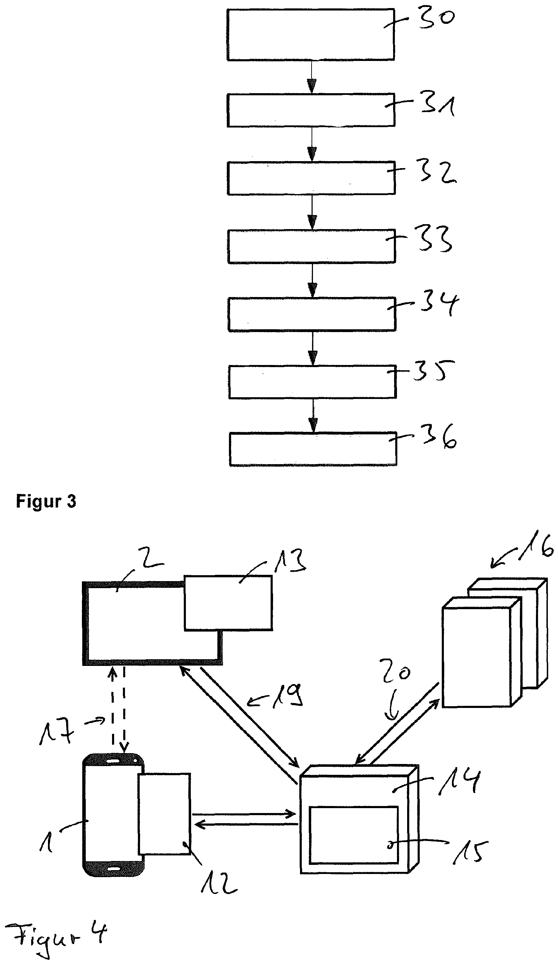

In einer abgewandelten Ausführungsform wird der One-Time-Key nicht durch die App im Smartphone 1 generiert, sondern durch den Server 3 selbst. Das hat den Vorteil, dass die kritischen Vorgänge auf dem Server laufen, wo Updates in der Regel häufiger eingepflegt werden und Schadsoftware seltener vorkommt. Die Mobile App auf dem Smartphone stellt dazu über die Datenleitung 6, 7 eine Anfrage an den Server und erhält über eine verschlüsselte Verbindung 8, 11 ein auf dem Server generiertes OTK. Die Anfrage wird durch das geheime Passwort gesichert. Das Smartphone überträgt über die physikalisch gesicherte Infrarotverbindung 5 das OTK zum Fernsehgerät, das sich nun am Server über eine verschlüsselte Verbindung 9, 7 anmelden kann. Der Server vergleicht den erhaltenen und generierten OTK und überträgt über die Datenleitung 8, 10 die persönlichen Daten auf das Fernsehgerät. Auch hier erfolgt der Schlüsselaustausch automatisch und kann daher bei Bedarf in kurzen Zeitabständen wiederholt werden. Figur 3 zeigt die entsprechenden Verfahrensschritte:
Zunächst stellt der Nutzer in Schritt 30 über das Smartphone und der darauf laufenden App eine Anfrage an den Server, der den One-Time-Key generiert (Schritt 31) und in Schritt 32 über das Internet an das Smartphone weiterleitet. Die gesamte Kommunikation kann mit dem öffentlichen Schlüssel des Servers beispielsweise über https abgesichert werden. Die App auf dem Smartphone sendet den Schlüssel via Infrarot an das Fernsehgerät (Schritt 33) und dieses leitet ihn via Internet weiter an den Server (Schritt 34). Nun kann der Server in Schritt 35 den über die Datenleitungsstrecke erhaltenen OTK mit dem ursprünglich generierten vergleichen und bei Übereinstimmung in Schritt 36 die Login-Daten an das Fernsehgerät senden.

Das Smartphone des Nutzers führt dabei die gesamte Personalisierung durch. In seiner Konfiguration wird festgelegt, welche Server angesprochen und welche Seiten des Servers aufgerufen werden. Auch die Loginnamen und Passwörter können auf dem Smartphone abgelegt werden. Auf diese Weise ist ein möglichst hoher Komfort gegeben: So kann der Nutzer, der einen Hotelraum zum ersten Mal betritt, die App auf seinem Smartphone starten, die dann das oben beschriebene komplexe Verfahren auslöst. Das Fernsehgerät wird einschalten, das Smartphone steuert den Login Vorgang auf mehreren Serverdiensten und die entsprechenden Informationen werden auf dem Bildschirm angezeigt. Bei hochauflösenden Fernsehgeräten können Nutzer gleichzeitig einen kompletten Überblick über Nachrichten, Bestellungen, soziale Kontakte und Börsenkurse erhalten. Dabei können Inhalte von vielen Anbietern gleichzeitig und ohne Aufwand für Login und Konfiguration dargestellt werden.

Für den gesamten Prozess ist eine App notwendig, die den One-Time-Key unterstützt und via Infrarot verschickt. Da eine Reihe Fernsehgeräte- und Smartphoneplattformen unterstützt werden müssen, ist ein gewisser Infrastrukturaufwand nötig. Zudem sind serverseitig erhebliche Anpassungen an die Infrastruktur nötig. Das bedeutet, dass Dienstanbieter zusätzliche Technik zur Verfügung stellen müssen. Besonders große Anbieter wie Facebook, Twitter und Whatsapp werden nur schwer von einer Übernahme zu überzeugen sein. Dieses Problem wird durch die folgende Erweiterung des ersten Verfahrens gelöst.

Dazu ist in Figur 4 eine weitere Ausführungsvariante gezeigt. Bei diesem Verfahren erfolgt die Kommunikation zu Social Media Servern 16 über eine Clearingstelle 14. Die Clearingstelle 14 verfügt über eine Virtualisierungssoftware 15, die sich gegenüber dem Anbieter der Social Media Dienste als der Rechner des Nutzers ausgibt. Damit besteht auch die Möglichkeit, ein zusätzliches Sicherheitsniveau zu erreichen: Da die gesamte Kommunikation mit den Geräten des Nutzers verschlüsselt ablaufen kann, wird es dem Nutzer ermöglicht, auch mit schwach gesicherten Social Media Anbietern zu kommunizieren, ohne dass seine Kommunikation überwacht werden kann, solange die Clearingstelle in einem sicheren Land liegt. Da in vielen Ländern die Hürden für eine Überwachung niedrig sind, wird es zu einem Trend kommen, solche Clearingstellen auszulagern. Es ist sogar möglich mit dieser Methode die eigene Position dem Social Media Anbieter gegenüber zu verheimlichen. Hardwareausstattung, IP-Adresse und Betriebssystem werden dem Social Media Anbieter ohnehin nur von der virtuellen Maschine übermittelt. Die Virtualisierungssoftware speichert keine Nutzerdaten, da diese beim Social Media Server liegen. Angreifer können hier also nur Verkehrsdaten abgreifen. Man erreicht so ein neues viel höheres Sicherheitsniveau.

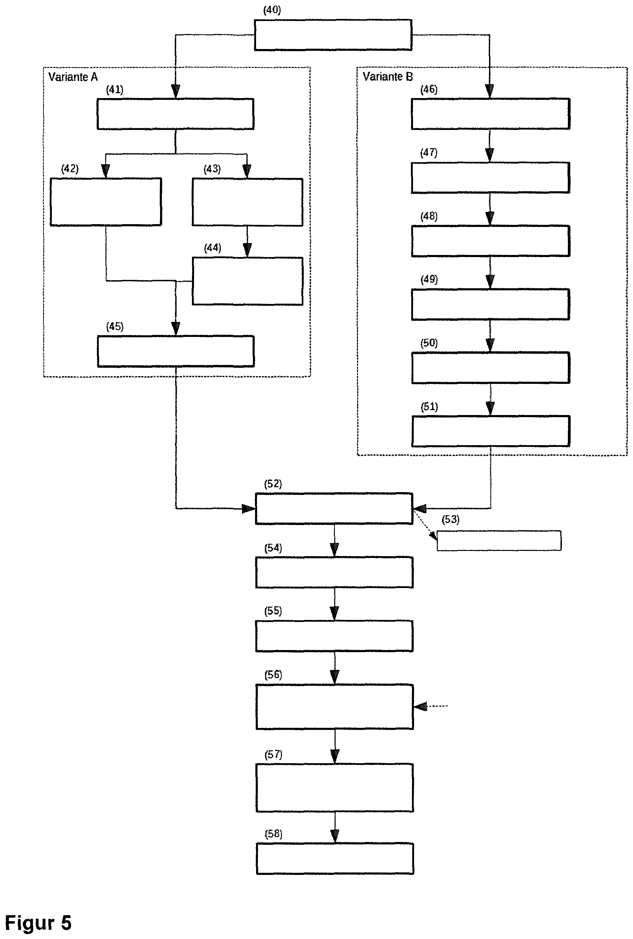

Die Clearingstelle nimmt über die Datenleitung 18 auf der einen Seite die Eingaben vom Nutzer entgegen und reicht sie an den jeweiligen Anbieter 16 weiter. Anderseits werden über die Datenleitung 19 die Ausgaben an das temporäre Anzeigegerät weitergeleitet. Sie ist also dafür verantwortlich die Datenströme zu trennen. Das Verfahren ist eine Erweiterung der beiden vorigen Varianten. Der Ablaufplan in Figur 5 berücksichtigt dabei sowohl die Generierung des One-Time-Key durch die App entsprechend der ersten Variante A (Schritte 41-45), als auch die Generierung durch den Server nach der zweiten Variante B (Schritte 46-51).

Zunächst stellt die auf dem Smartphone laufende App in Schritt 40 eine Verbindung zum TV-Gerät via Infrarot her. Nach der Variante A wird in Schritt 41 ein One-Time-Key seitens des Smartphones von der App generiert und an Server (Schritt 42) und TV-Gerät (Schritt 43) weitergeleitet. Der Server vergleicht beide erhaltenen Schlüssel in Schritt 45.

Nach der zweiten Variante B wird auf Anfrage (Schritt 46) der One-Time-Key von dem Server generiert (Schritt 47). Der Schlüssel (OTK) wird an die App auf dem Smartphone gesendet (Schritt 48), die ihn via Infrarot an das Fernsehgerät weiterleitet (Schritt 49). Von dort aus wird der OTK an den Server gesendet (Schritt 50), der beide erhaltenen Schlüssel vergleicht (Schritt 51). Als Ergebnis ergibt sich jeweils aus dem Vergleich, ob die auf dem Smartphone laufende App mit der Clearingstelle in Schritt 52 kommunizieren darf. Dabei übermittelt die App die Eingabedaten an die Virtualisierungssoftware 53. Die Clearingstelle stellt in Schritt 54 eine Anfrage an den Social Media Server, der in Schritt 55 Daten an die Clearingstelle sendet. Durch Bedienung auf dem Smartphone streamt die Virtualisierungssoftware die Daten auf das Fernsehgerät (Schritt 56), dabei werden die Eingaben auf dem Smartphone an die Clearing-Stelle (Schritt 57) und von dort an den Server (Schritt 58) weitergeleitet.

Der OTK wird wie bei den beiden anderen Varianten mit einer physikalisch gesicherten Verbindung an das temporäre Gerät übertragen. Die Clearingstelle ist nun die empfindlichste Komponente des Systems. Da die Clearingstelle zwischen Dienstanbieter und Anbieter angeordnet ist, stellt sie selbst ein Man-in-the-middle Szenario dar. Sie muss typischerweise dort angeordnet werden, wo ohnehin das höchste Risiko des Anwenders liegt und wo genügend Know-How zur Abwehr von Angriffen vorhanden ist, z.B. bei einem Telekommunikationsanbieter.

Die Vorteile des Verfahrens überwiegen jedoch: Es wird jede vorhandene Architektur unterstützt. Hardware- und betriebssystemübergreifend kann auf jeden Anbieter-Server zugegriffen werden. Es sind keine Änderungen an der Infrastruktur der Social Media Anbieter notwendig. Auch Handelsplattformen und andere Portale können sofort unterstützt werden. Der Anwender wird in die Lage versetzt temporäre Geräte für seine gewohnte Arbeit zu nutzen, ohne Eingaben an diesen Geräten machen zu müssen und ohne dass diese Geräte Kenntnis seiner permanenten Passwörter erhalten. Durch die Konfigurationsmöglichkeiten einer virtuellen Maschine kann der Anwender großen Einfluss auf das Layout der dargestellten Informationen nehmen und auch Informationen mehrerer Anbieter mischen.

## Patentansprüche

1. Verfahren zum Authentifizieren eines Nutzers vermittels eines temporär genutzten fremden Endgerätes (2) bei einem über ein Netzwerk (4), insbesondere über das Internet, erreichbaren Server (3), der einen Online-Dienst zugänglich macht, wobei der Nutzer sich zunächst mit seinem eigenen mobilen Endgerät (1) bei dem Server (3) durch Übersendung privater Zugangsdaten für den Zugang zu dem Online-Dienst authentifiziert, ein geheimes Sitzungs-Passwort generiert und zwischen dem Server (3) und dem mobilen Endgerät (1) ausgetauscht wird, wobei das Sitzungs-Passwort nach dem Austausch dem Server (3) und dem mobilen Endgerät (1) zur Verfügung steht, das Sitzungs-Passwort über eine Infrarotverbindung (5) vom mobilen Endgerät (1) zum fremden Endgerät (2) und von dort über eine Datenleitung (9) zum Server (3) gesendet wird, der Server (3) das vom fremden Endgerät (2) erhaltene Sitzungs-Passwort mit dem ihm zur Verfügung stehenden abgleicht, dass der Server (3) bei erfolgreichem Abgleich den Zugriff des fremden Endgerätes (2) auf den Online-Dienst erlaubt.

2. Verfahren nach Anspruch 1, wobei das Sitzungs-Passwort vom mobilen Endgerät (1) generiert und über eine Datenleitung (6) an den Server geschickt wird.

3. Verfahren nach Anspruch 1, wobei das Sitzungs-Passwort vom Server (3) generiert und über eine Datenleitung (11) an das mobile Endgerät (1) geschickt wird.

4. Verfahren nach Anspruch 1 oder 2, wobei nach Ablauf eines definierten Zeitraumes und/oder bei Eintreten eines bestimmten Ereignisses ein neues Sitzungs-Passwort generiert und ausgetauscht wird.

5. Verfahren nach einem der vorherigen Ansprüche, wobei eine Clearingstelle (14) zur Virtualisierung der Kommunikation und insbesondere zur Aufbereitung der Informationen von Internetdiensten und Neuanordnung in einem nutzerdefinierbaren Layout eingesetzt wird.

6. System zur Umsetzung des Verfahrens nach einem der vorherigen Ansprüche, umfassend ein temporär von einem Nutzer nutzbares fremdes Endgerät (2) mit einem Zugang zu einem Netzwerk (4), insbesondere zum Internet, wobei über das Netzwerk (4) ein Server (3) eines Online-Dienstes erreichbar ist,
- ein dem Nutzer zugeordnetes eigenes mobiles Endgerät (1) mit einer Verbindung zu dem Netzwerk (4) und dem Server (3), das zur Übersendung privater Zugangsdaten für den Zugang zu dem Online-Dienst eingereichtet ist,
ein Mittel zur Erzeugung eines geheimen Sitzungs-Passwortes, das zwischen dem Server (3) und dem mobilen Endgerät (1) ausgetauscht wird,
Infrarotschnittstellen jeweils an dem fremden Endgerät (2) und dem mobilen Endgerät (1) zum Aufbau einer Infrarotverbindung (5) zur Übertragung des Sitzungs-Passwort vom mobilen Endgerät (1) zum fremden Endgerät (2),
Mittel im Server (3) zum Abgleich des vom fremden Endgerät (2) übermittelten Sitzungs-Passwortes mit dem ihm zur Verfügung stehenden Sitzungs-Passwort.

## Claims

1. A method for authenticating a user by means of an external terminal device (2), which is used temporarily, in the case of a server (3), which can be reached via a network (4), via the Internet in particular, and which makes an online service accessible,
wherein the user is initially authenticated on the server (3) using their own mobile terminal device (1) by submitting private access data for access to the online service,
a secret session password is generated and exchanged between the server (3) and the mobile terminal device (1), wherein the session password is available to the server (3) and the mobile terminal device (1) after the exchange,
the session password is sent via an infrared connection (5) from the mobile terminal device (1) to the external terminal device (2) and from there via a data line (9) to the server (3),
the server (3) compares the session password received from the external terminal device (2) with that available to it,
the server (3) allows access to the online service for the external terminal device (2) in the event of successful comparison.

2. The method according to Claim 1,
wherein the session password is generated by the mobile terminal device (1) and sent via a data line (6) to the server.

3. The method according to Claim 1,
wherein the session password is generated by the server (3) and sent via a data line (11) to the mobile terminal device (1).

4. The method according to Claim 1 or 2,
wherein, after the expiry of a defined time period and/or upon the occurrence of a certain event, a new session password is generated and exchanged.

5. The method according to one of the preceding claims,
wherein a clearing house (14) is used for virtualizing the communication and in particular for preparing the information from Internet services and rearranging the same in a user-definable layout.

6. A system for implementing the method according to one of the preceding claims,
comprising an external terminal device (2), which can be used temporarily by a user, with access to a network (4), particularly to the Internet, wherein a server (3) of an online service can be reached via the network (4),
- an own mobile terminal device (1), assigned to the user, with a connection to the network (4) and the server (3), which terminal device is set up for submitting private access data for access to the online service,
a means for generating a secret session password, which is exchanged between the server (3) and the mobile terminal device (1),
infrared interfaces on the external terminal device (2) and the mobile terminal device (1) in each case, for building an infrared connection (5) for transmitting the session password from the mobile terminal device (1) to the external terminal device (2),
means in the server (3) for comparing the session password transmitted from the external terminal device (2) with the session password available to the same.

## Revendications

1. Procédé, destiné à identifier un abonné au moyen d'un terminal (2) tiers, utilisé de manière temporaire auprès d'un serveur (3) accessible via un réseau (4), notamment via Internet, qui fournit l'accès à un service en ligne,
lors duquel,
dans un premier temps, l'abonné s'authentifie d'abord avec son propre terminal mobile (1) auprès du serveur (3), par l'envoi de données d'accès privées ouvrant l'accès au service en ligne,
un mot de passe de session secret est généré et échangé entre le serveur (3) et le terminal mobile (1), après l'échange, le mot de passe de session étant à la disposition du serveur (3) et du terminal mobile,
le mot de passe de session est envoyé via une connexion par infra-rouges (5) du terminal mobile (1) vers le terminal tiers (2) et de là, via une ligne de données (9) vers le serveur (3),
le serveur (3) compare le mot de passe de session obtenu de la part du terminal tiers (2) avec celui qui lui est mis à disposition,
si la comparaison est réussie, le serveur (3) permet au terminal tiers (2) d'accéder au service en ligne.

2. Procédé selon la revendication 1, lors duquel le mot de passe de session est généré par le terminal mobile (1) et envoyé au serveur via une ligne de données (6).

3. Procédé selon la revendication 1, lors duquel le mot de passe de session est généré par le serveur (3) et envoyé au terminal mobile (1) via une ligne de données (11).

4. Procédé selon la revendication 1 ou 2, lors duquel après l'expiration d'une période définie et/ou lors de la production d'un certain événement, un nouveau mot de passe de session est généré et échangé.

5. Procédé selon l'une quelconque des revendications précédentes, lors duquel un système de compensation (14) est utilisé pour virtualiser la communication et notamment pour préparer les informations du service Internet et pour les replacer dans une configuration définissable par l'abonné.

6. Système, destiné à mettre en oeuvre le procédé selon l'une quelconque des revendications précédentes, comprenant
un terminal tiers (2) temporairement utilisable par un abonné, disposant d'un accès à un réseau (4), notamment à Internet, un serveur (3) d'un service online étant joignable via le réseau (4),
- un propre terminal mobile (1) associé à l'abonné pour une connexion au réseau (4) et au serveur (3), qui est aménagé pour envoyer des données d'accès privées ouvrant l'accès au service en ligne,
un moyen destiné à générer un mot de passe de session secret qui est échangé entre le serveur (3) et le terminal mobile (1),
des interfaces infra-rouges respectivement sur le terminal tiers (2) et le terminal mobile (1), destinées à établir une connexion par infra-rouges (5) pour transmettre le mot de passe de session du terminal mobile (1) vers le terminal tiers (2),
des moyens dans le serveur (3), destinés à comparer le mot de passe de session transmis par le terminal tiers (2) avec le mot de passe de session qui lui est mis à disposition.
